# EUROPÄISCHE PATENTSCHRIFT

(11) **EP 1 425 359 B1**
(45) Veröffentlichungstag und Bekanntmachung des Hinweises auf die Patenterteilung: **13.06.2007**
(21) Anmeldenummer: 02762412.1
(22) Anmeldetag: 30.07.2002
(51) Int. Cl.: C09J 7/02, C09J 153/02, C08K 5/00

(54) **OBERFLÄCHENSCHUTZFOLIE FÜR LACKIERTE FLÄCHEN MIT EINEM KLEBER AUF BASIS VON HYDRIERTEN BLOCKCOPOLYMEREN**
SURFACE PROTECTION FILM FOR PAINTED SURFACES WITH AN ADHESIVE BASED ON HYDROGENATED BLOCK COPOLYMERS
FILM PROTECTEUR SUPERFICIEL POUR SURFACES PEINTES, COMPORTANT UN ADHESIF A BASE DE COPOLYMERES SEQUENCES HYDROGENES

(30) Priorität: 23.08.2001 DE 10141379
(43) Veröffentlichungstag der Anmeldung: 09.06.2004
(73) Patentinhaber: tesa AG, 20253 Hamburg (DE)
(72) Erfinder: KRAWINKEL, Thorsten, 22457 Hamburg (DE)
(86) Internationale Anmeldenummer: PCT/EP2002/008438
(87) Internationale Veröffentlichungsnummer: WO 2003/018702

(56) Entgegenhaltungen:
- EP-A- 0 479 311
- EP-A- 0 519 278
- US-A- 5 204 390

## Beschreibung

Die Erfindung betrifft die Verwendung einer selbstklebenden Schutzfolie zum Schutz von lackierten Oberflächen.

Für Oberflächenschutz auf unlackierten Flächen gibt es eine Vielzahl von Produkten. Demgegenüber werden lackierte Flächen, besonders in frischem, unausgehärtetem Zustand bisher nur selten mit selbstklebenden Schutzfolien abgedeckt.

Die Konservierung und der Schutz von Kraftfahrzeugen während des Transports vom Hersteller zum Händler werden schon seit geraumer Zeit praktiziert.
Die herkömmliche Methode der Konservierung von Automobilen ist das Auftragen von Paraffinwachsen in der Stärke von 5 bis 20 µm. Es hat sich aber gezeigt, dass insbesondere bei waagerecht liegenden Flächen der Fahrzeuge, wie Motorhaube, Dach und Kofferraumdeckel, eine derart dünne und zumeist ungleichmäßige Schicht gegen äußere Einflüsse, wie beispielsweise saurer Regen und die ätzende Wirkung von Vogelkot, nicht genügend Schutz bietet.
Ein erheblicher Nachteil der Paraffinwachsversiegelung ist zudem die notwendige Entkonservierung mittels Dampfstrahl, Tensiden oder Lösungsmitteln. Die umweltgerechte Rückgewinnung und Entsorgung der Rückstände verursachen einen großen apparativen Aufwand sowie sehr hohe Kosten.

Eine aktuelle Entwicklung auf dem Gebiet des Automobil-Transportschutzes ist der Einsatz von Hauben, die das gesamte Fahrzeug bedecken und durch Wärmeeinwirkung passgenau aufgeschrumpft werden.

Solche Haubenlösungen sind sehr kostspielig und erfordern großen Aufwand beim Anlegen der Haube, dem Aufschrumpfen und vor allem beim Einsteigen in den maskierten Wagen. Dafür sind eigens Reißverschlussöffnungen vorgesehen, die zeitraubend geöffnet und wieder verschlossen werden müssen. Die Sicht beim Rangieren ist stark beeinträchtigt, und es kommt durch eingeschlossenen Schmutz und durch unvermeidbares Scheuern auf dem Lack stellenweise zu Mattierungen. Diese Lösung hat sich bislang nicht durchsetzen können.

In den letzten Jahren werden statt dessen verstärkt temporär aufgebrachte selbstklebende Oberflächenschutzfolien angewendet. Diese sind speziell für den Transportschutz von frischen Kraftfahrzeugen vorgesehen und haben eine gegenüber den Wachsen deutlich verbesserte Schutzwirkung gegen mechanische und chemische Einflüsse sowie gegenüber den Hauben den Vorteil, kostengünstiger und deutlich schneller applizierbar zu sein.

Wesentliche Anforderungen an eine Oberflächenschutzfolie für KFZ-Lacke sind
- gute Schutzwirkung für den Lack gegen chemische und mechanische Einflüsse.
- Witterungsbeständigkeit über den gesamten Zeitraum der Transportkette vom Werk bis zum Händler, der je nach Entfernung etliche Monate betragen kann. So muss eine solche Folie auch nach langer intensiver Sonnenlichtexposition in einem Stück abziehbar sein und darf keine Klebmasserückstände auf dem Lack hinterlassen.
- ausreichende Anfangsklebrigkeit, um sich in schwierigen Verklebungsgeometrien nicht vorzeitig selbsttätig abzulösen.
- ausgewogene Endklebkraft, damit die Folie einerseits sicher haftet (auch bei starkem Fahrtwind oder Regen), andererseits ohne großen Kraftaufwand oder gar Reißen entfernbar ist. Ideal wäre die gewünschte Verklebungsfestigkeit von Anfang an. In der Praxis ist die Haftung jedoch zunächst schwächer und nimmt dann mit der Zeit und besonders unter Temperatureinfluss zu. Dieses wird in der Fachsprache "Aufziehen" genannt.
- Lackverträglichkeit, was bedeutet, dass die Lackoberfläche nach Entfernen der Schutzfolie keinerlei Beeinträchtigungen in Form von Belägen oder Deformationen aufweisen soll. Deformationen sind Abdrücke im Lack, die sich einerseits als Konturen von Folienkante, eingeklebten Luftblasen und Falten, andererseits als Mattierungen unter der gesamten beklebten Fläche zeigen.
- hohe UV-Stabilität, damit die Klebmasse nicht unter Bewitterung zersetzt wird und entweder ihre Klebkraft verliert oder mit der Lackoberfläche reagiert.

Bei lackierten Oberflächen, die keiner Bewitterung ausgesetzt werden, zum Beispiel lackierte Möbel, muss auf die ausgezeichnete UV-Stabilität der Schutzfolie weniger Wert gelegt werden.

Gemäß dem Stand der Technik werden zur Abdeckung von Fahrzeuglacken als Folienmaterialien in der Regel Polyolefine oder Mischungen aus solchen, die üblicherweise mit Lichtschutzmitteln und Titandioxid abgemischt sind, verwendet.

Als Selbstklebemassen finden vielfältige Systeme Verwendung, die aber ausnahmslos mit Schwächen behaftet sind.

Selbstklebemassen auf Naturkautschukbasis haben eine relativ gute Anfangshaftung und lassen sich rückstandsfrei wieder abziehen. Diese Massen sind allerdings selbst bei kurzzeitiger Einwirkung von UV-Strahlung nicht alterungsstabil. Dies führt zu starken schmierigen oder lackartig verhärteten Rückständen auf dem Lack nach praxisüblichen Witterungsbeanspruchungen über einige Monate.

In US 5,612,136 A1 ist eine Schutzfolie mit einer Selbstklebemasse auf Acrylatbasis erwähnt. Polyacrylatmassen sind zwar sehr UV-stabil, unterwirft man aber unvernetzte Polyacrylatmassen einer Wechselklimalagerung, so zeigen sie nur teilweise eine gute Verträglichkeit mit Lackoberflächen. Zudem zeigen die Polyacrylatmassen ein unerwünscht starkes Aufziehverhalten, d.h., das Entfernen der Folie nach einiger Zeit ist sehr kraftaufwendig. Sind diese Massen chemisch oder durch Strahlen stark vernetzt, lassen sie sich zwar leichter abziehen, verursachen aber auf der anderen Seite verstärkt deutlich sichtbare, bleibende Deformationen der Lackoberfläche.

Die in der DE 195 32 220 A1 dargelegte Klebefolie mit Polyethylenvinylacetat-Kleber (EVAc) besitzt deutlich bessere Haftungseigenschaften als die beiden oben beschriebenen Systeme.

Schutzfolien mit EVAc-Massen erreichen bereits nach kurzer Zeit gute Verklebungswerte und gewährleisten eine große Verklebungssicherheit gegen unerwünschtes selbsttätiges Ablösen während des Transportes. Auf der anderen Seite gerät die Verklebungsfestigkeit beim Abziehen nach Gebrauch zum Nachteil, da der Kraftaufwand wie bei den Polyacrylatmassen deutlich zu hoch ist, wodurch die Klebefolie häufig nicht ohne Abrisse abgezogen werden kann. Die Beeinflussung der zu schützenden Lacke ist im allgemeinen gering. Besonders hervorzuheben ist die UV-Stabilität.

Selbstklebemassen auf Polyisobutylenbasis (Polyisobutylenhomopolymer - oder Butylkautschuk) können zwar nach Lagerung wesentlich leichter wieder abgezogen werden, zeigen aber nach einer Wechselklimalagerung auf in der Automobilindustrie gebräuchlichen Lacken teilweise eine so geringe Haftfestigkeit, dass sie bei ruckartiger Beanspruchung, wie sie bei Flattern im Fahrtwind auftritt, die in der Praxis geforderte Verklebungsfestigkeit nicht immer ausreichend erreichen. Insbesondere bei Feuchtigkeitseinfluss ist die Haftfestigkeit häufig derart reduziert, dass sich die Folie während des Transports von den geschützten Fahrzeugen ablöst, so dass zum einen keine Schutzwirkung mehr besteht und zum anderen ein Sicherheitsrisiko vorliegt, wenn sie nachfolgenden Fahrzeugen auf die Windschutzscheibe weht.

Darüber hinaus weist diese Selbstklebemasse keine Verträglichkeit mit den im Automobilbau üblichen Dichtungsprofilen beziehungsweise den darin enthaltenen Weichmachern auf: beim Abziehen der Schutzfolie von Fensterprofilen verbleiben auf dem Gummi Rückstände des Klebers. Derartige Klebeartikel sind in EP 0 519 278 A1, JP 95-325285 A und US 5,601,917 A1 beschrieben.

Die EP 0 519 278 A1 beschreibt eine derartige Folie zum Schutz von Automobilen, die aus einem Träger besteht, der mit einem Haftklebstoff auf Kautschukbasis, insbesondere Polyisobutylen, der ein dynamisches Elastizitätsmodul von 2 x 10⁵ bis 7 x 10⁶ dyn/cm², dies entspricht in SI-Einheiten einem Wert von 2 x 10⁴ bis 70 x 10⁴ Pa, bei 60 °C aufweist, beschichtet ist.

Anwendungstechnische Versuche mit einer derartigen Selbstklebefolie zeigen eine gute Verträglichkeit mit Lackoberflächen. Die Haftfestigkeit nach Wechselklimalagerung auf in der Automobilindustrie gebräuchlichen Lacken ist jedoch so gering, dass die in der Praxis geforderte Verklebungsfestigkeit nicht immer ausreichend gegeben ist.

Nachteilig ist ebenfalls das Alterungsverhalten der Polyisobutylene. Polyisobutylene sind anfällig für Alterung durch UV-Strahlung, wodurch die Kohäsion maßgeblich gesenkt wird. Dies führt zu Rückständen auf dem Lack nach dem Demaskieren. Aus diesem Grund ist die im Markt befindliche Klebefolie auf Basis von Polyisobutylen stark pigmentiert, der zersetzende Einfluss von Licht soll von der Klebmasse möglichst ferngehalten werden. Im Kantenbereich wird die Klebmasse jedoch direkt dem UV-Licht ausgesetzt, was dort zu starken Rückständen führt. Dies versucht man durch den Zusatz von Antioxidantien und HALS-Lichtschutzmitteln im Polyisobutylen zu vermeiden, diese Additive sind in der US 5,601,917 A1 beschrieben.

Die in DE 197 42 805 A1 beschriebene Klebmasse basiert auf einem Copolymer, dass aus mindestens zwei verschiedenen Olefinen mit 2 bis 12 Kohlenstoffatomen sowie einem Dien besteht. Bevorzugt werden Ethylen-Propylen-Dien-Terpolymeren (EPDM) verwendet. Unpolare Ethylen-Propylen-Dien-Polymere zeichnen sich durch gute Witterungs- und UV-Stabilität aus, so dass sie hervorragend als Klebmasse für Oberflächenschutzfolien geeignet sind. Die in dem Patent beschriebenen Terpolymere besitzen eine Mooney-Viskosität ML (1+4) 125 °C kleiner 50.

Untersuchungen verschiedener EPDM-Muster haben gezeigt, dass die Adhäsionsfähigkeit von EPDM-Polymeren mit steigender Mooney-Viskosität abnimmt, so haben nur Typen mit einer Mooney-Viskosität ML (1+4) 125 °C unterhalb von 30 eine ausreichende inhärente Klebrigkeit. Die Kohäsion dieser EPDM-Typen ist aber für eine Anwendung als temporäre Selbstklebmasse zu gering (analog WO 96/37568 A1), Klebmasserückstände auf der Lackoberfläche nach Bewitterung sind die Folge.

Das Beispiel 1 in DE 197 42 805 A1 beschreibt eine selbstklebende Schutzfolie mit einer Klebmasse bestehend aus einem EPDM mit einer Mooney-Viskosität ML (1+4) 125 °C von 28 sowie einem Lichtschutzmittel. Bei dieser Schutzfolie wird eine ausreichende hohe Klebkraft auf einer PU-Lackoberfläche von 0,4 N/cm erhalten.

Ein erheblicher Nachteil ist jedoch, bedingt durch das niedrige Molekulargewicht des Polymers, dass es nach Lagerung bei erhöhter Temperatur (90 °C) nicht möglich ist, diese Schutzfolie rückstandsfrei von der Lackoberfläche abzuziehen. Bereits bei leicht erhöhten Abzugstemperaturen von 40 °C versagt diese Klebmasse vollständig und spult vollflächig auf die Lackoberfläche um. Beim Abziehen mit praxisnaher Abzugsgeschwindigkeit von 20 m/min werden ein starker Anstieg der Abzugskräfte (4,3 N/cm) sowie vollflächige Masserückstände auf der Lackoberfläche beobachtet. Beim Abziehen der Schutzfolie von Prüflackoberflächen mit geringeren Abzugsgeschwindigkeit von 0,3 m/min (entsprechend AFERA 4001 beziehungsweise DIN EN 1939) werden nach Wechselklimalagerung dagegen lediglich punktuelle Masserückstände beobachtet und Klebkräfte von 2,3 N/cm gemessen.

In der Praxis werden die Fahrzeuge jedoch mit einer höheren Abzugsgeschwindigkeiten von mindestens 15 bis 30 m/min demaskiert, so dass die Messung der Klebkräfte nach AFERA 4001 beziehungsweise DIN EN 1939 nicht praxisrelevant ist. Eine Beurteilung der Eignung einer selbstklebenden Schutzfolie anhand dieser Messmethoden ist nicht möglich.

Dem starken Aufziehen versucht man in den Beispielen 2 und 4 der Beschreibung durch eine Vernetzung der Klebmasse mittels Elektronen- beziehungsweise UV-Strahlung zu begegnen. Hier wird eine Klebkraft auf Lack (Abzugsgeschwindigkeit 0,3 m/min) nach Wechselklimalagerung von 2,2 N/cm erhalten. Der entsprechende Wert nach Wechselklimalagerung und einer Abzugsgeschwindigkeit von 20 m/min liegt bei 3,4 N/cm. Durch die Vernetzung wird eine Erhöhung der Kohäsion der Klebmasse erreicht, dadurch können Massereste auf der Lackoberfläche nach dem Abziehen von der Lackoberfläche vermieden werden. Die höhere Kohäsion der Klebmasse spiegelt sich ebenfalls in der Rückstandsfreiheit beim Abziehen der Schutzfolie von lackierten Prüfblechen bei Temperaturen bis zu 60 °C wieder. Andererseits ist die Klebmasse durch die Vernetzung nun jedoch relativ hart, was zu erheblichen Deformationen der Lackoberfläche sowie zu einer unzureichenden Anfangsklebkraft von 0,2 N/cm führt.

Ein weiteres Beispiel ist eine auf Poly-α-Olefinen basierende Klebmasse (DE 197 30 193 A1). Bei dieser Oberflächenschutzfolie wird ebenfalls eine erhebliche Diskrepanz zwischen den Klebkräften bei geringer und höherer Abzugsgeschwindigkeit beobachtet. Analog DE 197 42 805 A1 werden auch hier in den Beispielen nur Polymere mit einer Mooney-Viskosität ML (1+4) 125°C unter 50 verwendet. Dadurch werden ebenfalls als Folge der geringen Kohäsion starkes Aufziehen und Masserückstände auf der Lackoberfläche beobachtet. Die Abzugskräfte liegen oberhalb von 3,2 N/cm.

Die WO 96/37568 A1 beschreibt die Verwendung von Polyhexen beziehungsweise Polyocten für einen unpolaren Haftkleber. Die in den Beispielen beschriebenen Polymere weisen wegen der geringen Kohäsion zwar ein geringes Aufziehen auf, bedingt durch das niedrige Molekulargewicht derartiger handelsüblicher Polymere führen diese Polymere aber ebenfalls zu Rückständen, die man durch Zugabe anderer Polymere, dort "cold flow restricting agent" genannt, zu vermeiden versucht. Für die Praxis sind die genannten Kleber trotzdem noch zu wenig kohäsiv, was nach Bewitterung zu Rückständen führt, insbesondere wenn das Klebeband durch Wärmeeinwirkung schrumpft.

Wesentlich UV-stabiler als Polyisobutylene sind Kleber aus hydrierten Styrol-Dien-Blockcopolymeren, wie sie in JP 08 027 444 A1 beschrieben sind. Vorteilhaft ist die hohe Kohäsion dieser Klebmassen, insbesondere bei moderaten Temperaturen der durch die Domänenbildung hervorgerufen wird.

Die US 5,204,390 A beschreibt eine Klebmasse, die aus Styrolblockcopolymeren, Harzen und einem Weichmacher besteht, wobei der Weichmacher mit einem anderen Stoff reagieren soll. Als Anwendungen sind Klebebänder oder Etiketten erwähnt. Schutzfolien und insbesondere solche für lackierte Oberflächen finden keine Erwähnung.

Die EP 0 479 311 A2 offenbart ebenfalls keine Schutzfolien und insbesondere keine solchen für lackierte Oberflächen.

Ein wesentlicher Nachteil solcher Blockcopolymere ist die Härte dieser Klebmassen, die durch die Styroldomänen so hoch liegt. Bedingt durch die große Härte kommt es bei dieser Art von Klebmassen zu schweren Deformationen und Änderungen des Lackes, besonders nach längerer Lagerung.

Als unpolare Klebmassenbasis für den Oberflächenschutz mit einer ausreichend hohen Kohäsion eignen sich lediglich Polymere aus den Klassen der Polyisobutylene und Butylkautschuke, der hydrierten Styrol-Block-Copolymere sowie der Ethylen/Propylen-Co- und Terpolymere.

Aufgabe der folgenden Erfindung ist es, die Vorteile des Klebmassesystems auf Basis der Styrolblockcopolymere, nämlich gute Anfangshaftung, große Verklebungssicherheit, und geringes Aufziehen, zu nutzen und eine Möglichkeit zu finden, den wesentlichen Nachteil der starken Lackdeformationen deutlich zu verringern, ohne die Stärken zu beeinträchtigen, um daraus eine Oberflächenschutzfolie insbesondere für den Transportschutz fabrikneuer Automobile zur Verfügung zu stellen.

Gelöst wird diese Aufgabe durch die Verwendung einer selbstklebenden Schutzfolie, wie sie im Hauptanspruch niedergelegt ist. Gegenstand der Unteransprüche sind dabei vorteilhafte Weiterbildungen der selbstklebenden Schutzfolie.

Überraschend und selbst für den Fachmann unerwartet zeigt eine selbstklebende Schutzfolie mit einer ein- oder mehrlagigen, insbesondere polyolefinischen Trägerschicht und einer selbstklebenden Schicht die Eigenschaften, die diese für Oberflächenschutzanwendungen auf lackierten Oberflächen benötigt.

Die Selbstklebemasse der Schutzfolie ist folgendermaßen aufgebaut:
- ein oder mehrere Elastomere auf Basis von Blockcopolymeren, enthaltend Polymerblöcke gebildet von Vinylaromaten (A-Blöcke), bevorzugt Styrol, und solchen gebildet durch Polymerisation von 1,3-Dienen (B-Blöcke), bevorzugt Butadien und Isopren beziehungsweise deren Hydrierungsprodukten, sowie
- 30 bis 180 Teile Klebharze bezogen auf 100 Teile des Elastomers und
- 20 bis 170 Teile an polymerem Weichmacher bezogen auf 100 Teile des Elastomers, wobei dieser aus der Gruppe der Polyethylen-Propylen-Copolymere, Polyisobutylen und Polybutylen stammt und eine Erweichungstemperatur von unter 25 °C besitzt,
- und wobei die Summe der Anteile der Harze und polymeren Weichmacher 200 Teile nicht übersteigt

Als Elastomere kommen solche auf Basis von Blockcopolymeren, enthaltend Polymerblöcke gebildet von Vinylaromaten (A-Blöcke), bevorzugt Styrol, und solchen gebildet durch Polymerisation von 1,3-Dienen (B-Blöcke), bevorzugt Butadien und Isopren oder für UVstabile Klebmassen besonders bevorzugt deren Hydrierungsprodukte, zur Anwendung. Sowohl Homo- als auch Copolymerblöcke sind erfindungsgemäß nutzbar. Resultierende Blockcopolymere können gleiche oder unterschiedliche B-Blöcke enthalten. Blockcopolymere können lineare A-B-A Struktur aufweisen, einsetzbar sind ebenfalls Blockcopolymere von radialer Gestalt sowie sternförmige und lineare Multiblockcopolymere. Als weitere Komponenten können A-B Zweiblockcopolymere vorhanden sein. Blockcopolymere von Vinylaromaten und Isobutylen sind ebenfalls erfindungsgemäß einsetzbar. Sämtliche der vorgenannten Polymere können alleine oder im Gemisch miteinander genutzt werden.

Anstelle der Polystyrolblöcke können auch Polymerblöcke auf Basis anderer aromatenhaltiger Homo- und Copolymere (bevorzugt C-8 bis C-12 Aromaten) mit Glasübergangstemperaturen von > ca. 75 °C genutzt werden, wie zum Beispiel α-methylstyrolhaltige Aromatenblöcke.

Anstelle von Styrol-Butadien-Blockcopolymeren und Styrol-Isopren-Blockcopolymeren und deren Hydrierungsprodukten, mithin Styrol-Ethylen/Butylen-Blockcopolymere und Styrol-Ethylen/Propylen-Blockcopolymere, können erfindungsgemäß ebenfalls Blockcopolymere und deren Hydrierungsprodukte genutzt werden, welche weitere polydienhaltige Elastomerblöcke nutzen, wie zum Beispiel Copolymere mehrerer unterschiedlicher 1,3-Diene. Erfindungsgemäß nutzbar sind des weiteren funktionalisierte Blockcopolymere, wie zum Beispiel maleinsäureanhydridmodifizierte oder silanmodifizierte Styrolblockcopolymere.

Gemäß einer hervorragenden Ausführungsform der Erfindung sind die Elastomere überwiegend im Mittelblock hydriert, insbesondere aber vollständig im Mittelblock hydriert.

Als weitere Additive können typischerweise genutzt werden:
- primäre Antioxidantien, wie zum Beispiel sterisch gehinderte Phenole,
- sekundäre Antioxidantien, wie zum Beispiel Phosphite oder Thioether,
- Prozeßstabilisatoren, wie zum Beispiel C-Radikalfänger,
- Lichtschutzmittel, wie zum Beispiel UV-Absorber, sterisch gehinderte Amine,
- Verarbeitungshilfsmittel sowie
- gegebenenfalls weitere Polymere von bevorzugt elastomerer Natur. Entsprechend nutzbare Elastomere beinhalten u. a. solche auf Basis reiner Kohlenwasserstoffe, zum Beispiel gesättigte Ethylen-Propylen-Copolymere, Ethylen-Propylenkautschuk.

Die erfindungsgemäßen Klebmassen auf Basis von hydrierten Styrolblockcopolymeren sind im Vergleich zu den bekannten Klebemassen wesentlich weicher eingestellt, besitzen trotzdem aber noch eine ausreichende Kohäsion.

Da die Styrolblockcopolymere von Natur aus nicht haftklebrig sind, müssen sie durch die Zugabe von Klebharzen haftklebrig eingestellt werden.

Als Klebrigmacher für derartige Haftklebemassen werden üblicherweise wegen der besonders für KFZ-Lacke geforderten UV-Beständigkeit als Hauptkomponente hydrierte Klebharze eingesetzt.
Bevorzugt geeignet sind u. a.
- hydrierte Polymerisate des Dicyclopentadiens (zum Beispiel Escorez 5300er Serie; Exxon Chemicals),
- hydrierte Polymerisate von bevorzugt C-8 und C-9 Aromaten (zum Beispiel Regalite und Regalrez Serien; Hercules Inc. // Arkon P Serie; Arakawa), diese können durch Hydrierung von Polymerisaten aus reinen Aromatenströmen entfließen oder auch durch Hydrierung von Polymerisaten auf Basis von Gemischen unterschiedlicher Aromaten basieren,
- teilhydrierte Polymerisate von C-8 und C-9 Aromaten (zum Beispiel Regalite und Regalrez Serien; Hercules Inc. // Arkon M; Arakawa),
- hydrierte Polyterpenharze (zum Beispiel Clearon M; Yasuhara),
- hydrierte C-5/C9-Polymerisate (zum Beispiel ECR-373; Exxon Chemicals),
- aromatenmodifizierte selektiv hydrierte Dicyclopentadienderivate (zum Beispiel Escorez 5600er Serie; Exxon Chemicals) sowie
- hydrierte und teilhydrierte kolophoniumbasierende Harze (zum Beispiel Foral, Foralyn; Hercules // Hydrogral; DRT).

Für den Einsatz als Oberflächenschutzfolie, die einer UV-Belastung ausgesetzt ist, kommen hauptsächlich hydrierte Kohlenwasserstoffharze zum Einsatz.

Bei Anwendungen, bei der eine Widerstandsfähigkeit gegenüber UV-Licht nicht so entscheidend ist, können auch nicht hydrierte Klebharze allein oder als Abmischkomponenten der hydrierten Klebharze zum Einsatz kommen.

Um bei reversiblen Klebebändern die Klebkraft der Klebmassen für eine spätere Demaskierung zu reduzieren, werden häufig Klebmassen mit einem sehr hohen (über 60 %) Elastomeranteil eingesetzt. Je höher der Elastomeranteil ist, desto härter ist aber auch die Klebmasse. Eine harte Klebmasse bedingt im Allgemeinen aber recht starke Lackdeformationen, weshalb die Klebmassen weicher eingestellt werden sollten. Weichmacher im herkömmlichen Sinne, wie zum Beispiel Mineralöle führen nicht nur zu einer geringeren Härte der Klebmassen, sondern verringern auch die Kohäsion der Klebmassen, so dass häufig ein Demaskieren nur schwer möglich ist, da Klebmassereste zurückbleiben. Besonders auf lackierten Oberflächen ist die Verwendung von weichmachenden Ölen kritisch, da diese in den Lack wandern können und damit zu Deformationen führen.

Erfindungsgemäß gelöst wird das Problem erstaunlicherweise durch den Einsatz von weichmachenden Polymeren, wie zum Beispiel flüssigen Ethylen-Propylen-Copolymeren (EPM oder EPDM) oder Polyisobutylenen mit einer Molmasse M_{w} von unter 150.000 g/mol.

Erfindungsgemäße Klebmassen basieren auf Styrolblockcopolymeren, die neben einem Klebharz als Weichmacher flüssige Polymere enthalten.

Hierdurch können die Klebmassen sehr viel weicher eingestellt werden, als herkömmliche Klebmassen auf Basis von Styrolblockcopolymeren, die hohe Kohäsion bleibt aber erhalten. Im Gegensatz zu weichmachenden Ölen neigen die beschriebenen weichmachenden Polymere deutlich weniger stark zur Wanderung in den Lack. Weichmachende Öle quellen den Lack häufig auf, es kommt zu Deformationen des Lackes, die unerwünscht sind. Die polymeren Weichmacher sind in ihrer Wanderung stark gehindert, neigen auch weniger stark zum Anquellen des Lackes.

Durch den Einsatz von weichmachenden Polymeren als Abmischkomponente von Styrolblockcopolymeren und Klebharzen wird wie bei der Verwendung von weichmachenden Ölen die Klebkraft verringert, was gerade bei Oberflächenschutzfolien von Vorteil ist.

Als flüssige Polymere im Sinne der Erfindung können flüssige Ethylen-Propylen-Copolymere (EPDM) (Trilene, Uniroyal Chemicals), Polybutene und Polyisobutylene mit einem Molekulargewicht Mw von unter 150.000 (Oppanol B 10, BASF // Vistanex LMMS, Exxon //Tetrax, Nippon Petro Chemicals) mit einem Erweichungspunkt unter 25°C dienen.
Die oben beschriebenen weichmachenden Polymere haben alle einen niedrigen Löslichkeitsparameter und sind deshalb sehr viel besser mit den elastomeren Mittelblöcken der Styrolblockcopolymere verträglich als mit den harten Styrolblöcken. Weichmacher, die auch in die Styroldomänen wandern können, führen zu einer deutlichen Verringerungen der Kohäsion, da die Styroldomänen aufgeweicht werden, eine Anwendung bei höheren Temperaturen ist damit nicht mehr möglich.

Erfindungsgemäße Klebmassen enthalten 30 bis 180 Teile Harz bezogen auf 100 Teile des Elastomers. Der Anteil an polymerem Weichmacher liegt zwischen 20 und 170 Teilen bezogen auf 100 Teile des Elastomers, wobei die Summe der Harze und der polymeren Weichmacher 200 Teile bezogen auf die Menge an Elastomer nicht übersteigt.

Es hat sich als besonders vorteilhaft erwiesen, wenn kein weichmachendes Öl eingesetzt wird.

Besonderer Vorteil der Systeme aus Styrolblockcopolymer(en) und polymeren Weichmachern ist das sehr geringe Aufziehen auf den Untergrund. Die Verklebungsfestigkeiten nach einer halben Stunde und nach einer Lagerung bei 90 °C über 3 Tage unterscheidet sich nur recht wenig. So kann bei Verwendung auf KFZ-Lacken schon kurze Zeit nach der Applikation mit dem Transport begonnen werden, ohne dass befürchtet werden muss, dass durch den Fahrtwind die Schutzfolie abgezogen wird. Andererseits ist die Klebkraft nach einer langen Lagerung nicht wesentlich angestiegen, was ein leichtes Demaskieren ermöglicht.

Die Variation und Kombination von Elastomeren sowie die Variation der Verhältnisse von Harzen zu polymeren Weichmachern, ermöglicht es, die Klebkraft genau den Erfordernissen anzupassen.

Selbst beim Einsatz nur eines Elastomeren, eines Harzes und eines polymeren Weichmachers ist es über das Verhältnis der drei Bestandteile möglich, die Klebkräfte stark zu variieren. Man muss dabei aufpassen, einen nicht zu geringen Elastomeranteil einzusetzen, da darunter die Kohäsion leidet.

Durch den Einsatz von nicht hydrierten Elastomeren, auch im Gemisch mit hydrierten Elastomeren können recht hohe Klebkräfte erzielt werden, allerdings nur für einen Gebrauch, bei dem UV-Stabilität der Klebmasse eine untergeordnete Rolle spielt.

Die Kohäsion der Klebmassen ist so hoch, dass selbst nach Lagerung unter hohen Temperaturen (90 °C, siehe Beispiele unten) keine Masserückstände auf dem Lack nach dem Demaskieren zu erkennen sind.

Die Schutzfolie ist nach Wechselklimalagerung rückstandsfrei bei Abzugsgeschwindigkeiten von 20 m/min mit einer Klebkraft von 2,3 bis 3,6 N/cm von lackierten Oberflächen abziehbar. Des weiteren ist ein rückstandsfreies Ablösen der Schutzfolie nach Wechselklimalagerung bis zu einer Temperatur von mindestens 50 °C möglich.

Die Klebkraft auf Stahl beträgt vorzugsweise 0,1 und 2 N/cm, sie liegt insbesondere zwischen 0,3 und 1 N/cm.

Die beschriebenen Selbstklebemassen können sowohl aus Lösung auf eine Trägerfolie aufgebracht als auch durch Coextrusion simuitan mit der Trägerschicht sowie weiteren Hilfsschichten erzeugt werden.

Als Trägerschicht des Klebers dient vorzugsweise eine thermoplastische Polyolefinfolie, welche unverstreckt ist und mindestens ein Polyolefin aus der Gruppe der Polyethylene (zum Beispiel HDPE, LDPE, MDPE, LLDPE, VLLDPE, Copolymere des Ethylens mit polaren Comonomeren) und der Gruppe der Polypropylene (zum Beispiel Polypropylen-Homopolymere, Polypropylen-Random-Copolymere oder Polypropylen-Block-Copolymere) enthält.

Bevorzugt werden Mischungen verschiedener geeigneter Polyolefine verwendet, um die mechanischen und thermischen Eigenschaften sowie Glanz, Extrusionsverhalten, Verankerung des Klebers, usw. optimal einstellen zu können.

Besonders geeignet ist als Trägerschicht eine thermoplastische Polyolefinfolie, welche unverstreckt ist und mindestens ein Polypropylenblockcopolymer enthält. Der Gehalt an Polypropylenblockcopolymer macht 10 bis 95 % (w/w) der Schutzfolie aus.

Derartige Folien können auf Blasanlagen oder vorzugsweise Gast-Anlagen (T-die technology) gefertigt werden, wobei die Folie nicht durch Recken (Verstrecken) mit Reckwalzen oder Reckrahmen mono- oder biaxial verstreckt wird. Beim Blasen einer solchen Folie ist die Orientierung über Abzugsgeschwindigkeit, Aufblasverhältnis und Temperaturprofil so gering wie möglich zu halten.

Die verwendeten Polypropylenblockcopolymere (auch Impact Resistant Polypropylen genannt) sind in der Literatur in Encycl. Polym. Sci. Technol. 13, 479ff (1988) und in Ullmann's Encyclopedia of Industrial Chemistry A21, 529ff (1992) beschrieben. Beispiele für Handelsnamen sind Propathene GSF 113 (ICI), 411 GA 05 (Amoco), PMA 6100 (Montell), Stamylan P (DSM), BD 801 F (Borealis), Daplen FFC1012 (PC), Novolen 2309 L.

Derartige Blockcopolymere unterscheiden sich untereinander im wesentlichen im Schmelzindex (= MFI = MFR) und im Gehalt an Comonomer. Der Schmelzindex beeinflußt die Festigkeit der Folie und die Fließfähigkeit der Schmelze in gegenläufiger Weise. Für die Herstellung der erfindungsgemäßen Schutzfolie ist ein Schmelzindex von 0,8 bis 15 g/10 min (ISO 1133 (A/4) bei 230 °C und 2,16 kg) günstig, um den Erfordernisse nach Zähigkeit und Reißfestigkeit einerseits und Verarbeitbarkeit (Produktionsgeschwindigkeit und Gleichmäßigkeit der Dicke bei coextrudierten Folien) andererseits zu erreichen. Der bevorzugte Bereich liegt zwischen 4 und 10 g/10 min. Die Coextrusion ist bei diesem Produkt ein geeignetes Mittel, um die Haftvermittlungsschicht bei der Herstellung der Folie einzubringen.

In dem Fall, daß Trägerfolie und Kleber durch Coextrusion miteinander verbunden werden, ist die Auswahl des Schmelzindex des Polypropylenblockcopolymers wie auch der weiteren thermoplastischen Bestandteile der Folienrezeptur wichtig. Der Gehalt an Comonomer in Polypropylenblockcopolymeren bestimmt die Weichheit, Schlagzugzähigkeit und die Wärmebeständigkeit der daraus hergestellten Schutzfolie. Vorzugsweise enthält die erfindungsgemäße Schutzfolie ein Polypropylenblockcopolymer mit 3 bis 15 % (w/w) Ethylen als Comonomer. Die Schlagzugzähigkeit nach DIN 53448 sollte längs und quer mindestens 1000 mJ/mm² betragen.

Als weitere Bestandteile können zum Beispiel Polyethylen (wie zum Beispiel HDPE, LDPE, MDPE, LLDPE, VLLDPE), Copolymere des Ethylens oder Propylens mit polaren Comonomeren, Polypropylen-Homopolymere oder Polypropylen-Random-Copolymere zur Feinabstimmung der Eigenschaften (mechanische, thermische oder andere Eigenschaften wie Glanz, Haftung des Klebers, Extrusionsverhalten usw.) mitverwendet werden. Besonders vorteilhaft ist die Kombination von mehreren Polypropylenen, insbesondere unterschiedlicher Weichheit und unterschiedlicher Schmelzindices, wie zum Beispiel weichem Blockcopolymer mit PP-Homopolymer oder einer harten Blockcopolymertype, da Zähigkeit, Wärmebeständigkeit und Fließverhalten besser an die Notwendigkeiten angepaßt werden können als bei alleiniger Verwendung eines Blockcopolymers. Für eine hinreichende Wärmebeständigkeit sollte der Anteil an Propylen in einer Folienschicht mindestens 65 % (w/w) betragen. Bei mehrlagigem Aufbau der Folienschicht ist dies diejenige Schicht, die für die Festigkeit verantwortlich ist und daher den höchsten Polypropylenanteil enthält (in der Regel auch die höchste Dicke aufweist) und nicht eine eventuelle Haftvermittlerschicht.

Weiter vorzugsweise kann die Folie bestehen aus einer Mischung aus
- 40 Gew.-Teilen bis 70 Gew.-Teilen Polyethylen,
- 20 Gew.-Teilen bis 40 Gew.-Teilen Polypropylen,
- 8 Gew.-Teilen bis 15 Gew.-Teilen Titandioxid,
- 0,3 Gew.-Teilen bis 0,7 Gew.-Teilen Lichtschutzstabilisatoren.

Von den 40 Gew.-Teilen bis 70 Gew.-Teilen Polyethylen in der Folie sind vorzugsweise 30 Gew.-Teile bis 50 Gew.-Teile schlagzähes Polyethylen.

Für die Trägerfolien ist eine Dicke von 20 bis 80 µm bevorzugt, gegebenenfalls einschließlich einer Haftvermittlerschicht, die zwischen der Trägerschicht und der Kleberschicht angeordnet ist.

Die Weichheit der Trägerfolie spielt bei der Verformbarkeit während der Applikation der Schutzfolie eine Rolle, die Kraft bei 10 % Dehnung sollte 25 N/15 mm, vorzugsweise 16 N/15 mm, sowohl in Längs- als auch in Querrichtung nicht überschreiten (Zugversuch nach DIN EN ISO 527-7-5). Daher sollen die Trägerfolien unverstreckt sein. Durch Recken steigt die Kraft bei 10 % Dehnung so stark an, daß die Anschmiegsamkeit nicht mehr gegeben ist.

Um der Trägerfolie die eventuell geforderte Witterungsstabilität zu geben, ist der Zusatz von Lichtschutzmitteln zu bevorzugen. Ihre Funktion besteht vorrangig in der Vermeidung der Versprödung der Trägerfolie. Derartige Lichtschutzmittel sind bei Gaechter und Müller, Taschenbuch der Kunststoff-Additive, München 1979, bei Kirk-Othmer (3.) 23, 615 - 627, bei Encycl. Polym. Sci. Technol. 14, 125 - 148 und bei Ullmann (4.) 8, 21; 15, 529, 676 beschrieben. Insbesondere HALS-Lichtschutzmittel sind für die erfindungsgemäße Schutzfolie geeignet. Die Menge des Lichtschutzmittels sollte mindestens 0,15 Gew.-%, vorzugsweise mindestens 0,30 Gew.-% bezogen auf die Trägerfolie betragen.

Eine Verwendung von Antioxidantien für die Folie (zum Beispiel Irganox 1010 oder Tris-Nonylphenyl-phosphit) ist vorteilhaft, aber nicht zwingend notwendig. Weitere geeignete UV-Absorber, Lichtschutz- und Alterungsschutzmittel sind in der EP 0 763 584 A1 aufgeführt.

Eine zusätzliche Verbesserung der Lichtstabilität der Trägerfolie ist auch durch Zusatz von Titandioxid möglich. Vorteilhaft bezüglich der mechanischen Eigenschaften und der Homogenität des Weißgrades sind 5 bis 15 Gew.-% Titandioxidzusatz.
Vorzugsweise liegt die UV-Durchlässigkeit der Schutzfolie im Bereich von 290 bis 360 nm durch das Zusammenwirken von Lichtschutzmitteln und Pigmenten unter ca. 1 %, vorzugsweise unter ca. 0,1 %.

Die so hergestellten Schutzfolien weisen eine gute Haftfestigkeit auf verschiedenen in der Automobilindustrie gebräuchlichen Lacken auf, so dass sich die Schutzfolie auch unter Windeinwirkung oder unter Spannung durch Verklebung auf gewölbten Flächen nicht vom Fahrzeug ablöst. Darüber hinaus zeigt die Selbstklebemasse eine hinreichende Verklebungsfestigkeit besonders innerhalb der ersten Minuten nach Applikation, so dass die Schutzfolie bereits nach einer halben Stunde zum Beispiel einer starken Fahrtwindbelastung (bis zu 160 km/h) ausgesetzt werden kann.

Die erfindungsgemäße Schutzfolie ist somit zum Montage- oder Transportschutz des frischen Abschlusslacks von Automobilen oder von frisch lackierten Oberflächen geeignet. Die Verklebung der Schutzfolie kann dabei ohne das Auftreten jedweder Nachteile bereits eine halbe Stunde nach Ofendurchgang der lackierten Oberflächen erfolgen, obwohl zu diesem Zeitpunkt der Lack noch nicht vollständig ausgehärtet ist.

Weiterhin zeichnet sich die erfindungsgemäße Schutzfolie dadurch aus, dass sie bei Automobilen in großer Breite über Motorhaube, Dach und Kofferraum applizierbar ist und sich aufgrund ihrer Verformbarkeit planen und sogar leicht gewölbten geformten Flächen sehr gut anpasst. Damit ist der Schutz der am stärksten durch Verschmutzung gefährdeten horizontalen Flächen möglich. Aber auch schmale Bereiche wie zum Beispiel der Türvorsprung unter den Fenstern, der Einstiegsbereich oder Stoßfänger können leicht abgedeckt werden. Der Schutz der vertikalen Flächen am Fahrzeug bietet sich besonders während der Montage derselben an.

Die Schutzfolie ist beständig gegen Sonnenlicht, Hitze und Kälte, wobei die Witterungsstabilität von wenigstens einem halben Jahr gegeben ist. Auch höchste Sonneneinstrahlungsquoten, wie sie beispielsweise in Florida auftreten, führen nicht zu einem Versagen oder Ablösen der Schutzfolie. Die extrem geringe UV-Durchlässigkeit der Schutzfolie unterstützt die Resistenz des Klebers gegen Sonneneinwirkung.

Darüber hinaus gewährleistet die Festigkeit der Schutzfolie im Vergleich zur Konservierung mit Wachs einen einwandfreien Schutz gegen Verschmutzungen wie Vogelkot und Beschädigungen des gesamten Fahrzeugs durch leichte mechanische Einwirkungen. Die stoffliche oder energetische Verwertung der Schutzfolie ist möglich, insbesondere weil selbige halogenfrei ist.

Insbesondere sind die erfindungsgemäßen Schutzfolien durch ihr hohes Haftungsniveau, aber dennoch nach langer Lagerung leichter Entfernbarkeit, zum Schutz des frischen Abschlusslacks von Fahrzeugen wie Automobilen und zum Schutz von frisch lackierten Fahrzeugteilen gegen Verschmutzungen und Beschädigungen während der Montage, des Transportes und der Lagerung geeignet.

Im folgenden soll die Erfindung anhand von Beispielen erläutert werden, ohne diese damit allerdings einschränken zu wollen.

### Beispiele

Alle Beispielfolien wurden durch Beschichtung eines coronavorbehandelten Polyolefinträgers mit den toluolischen Lösungen der einzelnen Kleberrezepturen hergestellt. Der Träger war 60 µm dick und setzte sich wie folgt zusammen:
- 60 Teile Polypropylen-Blockcopolymer Daplen FFC 2012 (PCD)
- 25 Teile Polypropylenhomopolymer Daplen KFC 201 (PCD)
- 6,3 Teile LDPE Lupolen 1840 H (Elenac)
- 8,4 Teile Titandioxid
- 0,3 Teile UV-Lichtschutzmittel Tinuvin 770 (Ciba-Geigy)

Die Schichtdicke des Haftkleberauftrages betrug nach dem Trocknen jeweils 15 µm, so dass die Muster eine Gesamtdicke von 85 µm aufwiesen.

In Tabelle 1 oben sind Beispielrezepturen gemäß den Patentansprüchen und Gegenbeispiele aufgeführt.

Die Muster wurden streifenweise auf 1K-PU-lackierte (Duraclear II, BASF) Musterbleche verklebt. Die Beurteilung der Muster erfolgte nach folgenden Kriterien:
1. Abzugskraft von Lack nach 30 min bei Raumtemperatur
2. Abzugskraft von Lack nach dreitägiger Lagerung bei 90 °C
3. Anwendungstechnische Beurteilung der Lackveränderungen

### Ermittlung der Beurteilungskriterien

### Abzugskraft von Lack nach 30 min bei Raumtemperatur und Abzugskraft von Lack nach dreitägiger Lagerung bei 90 °C

Die Klebkräfte wurden bei einem Abzugswinkel von 180° nach AFERA 4001 bestimmt. Hierbei wurden Stahlplatten sowie Prüfbleche, die mit dem PU-Lack lackiert sind, als Prüfuntergrund verwendet. In einer abgewandelten Klebkraftprüfung wurden die 15 mm breiten Teststreifen mit einer Geschwindigkeit von 20 m/min in einem 180° Winkel, bei einer Temperatur von 23 °C ± 1 °C und einer relativen Luftfeuchte von 50 % ± 5% von einem mit PU-Lack lackierten Blech abgezogen.

### Anwendungstechnisches Urteil über die Veränderungen des KFZ-Lackes

Das anwendungstechnische Urteil über die Veränderungen des KFZ-Lackes spricht eine Empfehlung aus, ob die Folie die anwendungstechnischen Anforderungen an eine gute Lackverträglichkeit zufriedenstellend erfüllt.

**Tabelle 1: Abzugskräfte von Lack nach unterschiedlichen Lagerungsbedingungen.**

| Musterrezepturen in Gewichtsteilen Abzugskräfte von Lack in N/cm | | | | | | | | | |
|---|---|---|---|---|---|---|---|---|---|
| Kom p. | Beispielnummer | 1 | 2 | 3 | 4 | 5 | 6 | 7 | 8 |
| | Kraton G 1657 ¹⁾ | 100 | 100 | 50 | 100 | 100 | 100 | 100 | 100 |
| | Kraton D 1102 ²⁾ | | | 50 | | | | | |
| | Regalite R 1100 ³⁾ | | | | | | 75 | 100 | 100 |
| | Foral 85 ⁴⁾ | 100 | 50 | 75 | 75 | 75 | | | |
| | Trilene CP 67 ⁵⁾ | 50 | 100 | 75 | | | 75 | | |
| | Tetrax 5T ⁶⁾ | | | | 75 | | | | |
| | Oppanol B 10 ⁷⁾ | | | | | 75 | | | |
| | Ondina G 41 ⁸⁾ | | | | | | | | 50 |
| | Irganox 1010 ⁹⁾ | 0,5 | 0,5 | 0,5 | 0,5 | 0,5 | 0,5 | 0,5 | 0,5 |
| | | | | | | | | | |
| | Abzugskraft frisch ¹⁰⁾ | 1,9 | 1,5 | 2,5 | 2,1 | 1,7 | 1,3 | 1,8 | 1,2 |
| | Abzugskraft final ¹¹⁾ | 2,5 | 2,3 | 3,1 | 2,9 | 2,4 | 1,9 | 2,7 | 1,7 |
| | Anwendungstechnische Beurteilung der Lackveränderungen | i.O. | i.O. | i.O. | i.O. | i.O. | i.O. | n.i.O. | n.i.O. |

| | | | | | | | | | |
|---|---|---|---|---|---|---|---|---|---|
| Abk.: i.O. = in Ordnung, n.i.O. = nicht in Ordnung ¹⁾ SEBS mit 13 % Blockpolystyrolgehalt der Fa. Kraton Polymers ²⁾ SBS mit 30 % Blockpolystyrolgehalt der Fa. Kraton Polymers ³⁾ hydriertes KW-Harz mit einem Erweichungspunkt von 99 °C der Fa. Hercules ⁴⁾ hydrierter Kolophoniumester (Erweichungspunkt von 80 °C) der Fa. Hercules ⁵⁾ flüssiges Ethylen-Propylen-Copolymer der Fa. Uniroyal Chemicals. ⁶⁾ Polyisobutylen (M_{w} = 107.000 g/mol) der Fa. Nippon Petrochemicals ⁷⁾ Polyisobutylen (M_{w} = 43.000 g/mol) der Fa. BASF ⁸⁾ aliphatenreiches Weichöl der Fa. Shell ⁹⁾ Alterungsschutzmittel der Fa. Ciba-Geigy ¹⁰⁾ Abzugskraft von Lack nach 30 min Verklebungszeit bei Raumtemperatur. ¹¹⁾ Abzugskraft von Lack nach 3 Tagen Verklebungszeit bei 90 °C. | | | | | | | | | |

### Diskussion

Alle Beispiele zeigen eine gute Anfangshaftung nach 30 min Lagerung bei Raumtemperatur, wobei "gut" in Praxistests als ca. ≥ 0,8 N/cm eingestuft wird. Auch die Klebkraft nach 3 Tagen Lagerung bei 90 °C ist nur wenig höher als die Anfangshaftung. Wie aus der Tabelle zu ersehen, kann das Klebkraftniveau leicht auf die besonderen Anforderungen eingestellt werden.

Da die Klebkräfte auf verschiedenen Lacken unterschiedlich sind, eröffnet sich so die Möglichkeit, auch für unterschiedliche Haftgründe jeweils ein geeignetes maßgeschneidertes Klebkraftprofil einzustellen.

Die Beispiele 7 und 8 zeigen zwar ein ähnliches Klebkraftprofil wie die anderen Beispiele, zeigen aber durch die größere Härte, beziehungsweise das Auswandern des Öls verstärkt Lackveränderungen, so dass die Anwendungstechnische Prüfung negativ ausfiel.

## Patentansprüche

1. Verwendung einer selbstklebenden Schutzfolie auf frisch lackierten Oberflächen von Automobilen oder Automobilteilen als Montage- oder Transportschutz mit einer ein- oder mehrlagigen, insbesondere polyolefinischen Trägerschicht und einer selbstklebenden Schicht, **dadurch gekennzeichnet, dass**
| | |
|---|---|
| die Selbstklebemasse folgendermaßen aufgebaut ist: | ein oder mehrere Elastomere auf Basis von Blockcopolymeren, enthaltend Polymerblöcke gebildet von Vinylaromaten (A-Blöcke), bevorzugt Styrol, und solchen gebildet durch Polymerisation von 1,3-Dienen (B-Blöcke), bevorzugt Butadien und Isopren beziehungsweise deren Hydrierungsprodukten, sowie |
| 30 bis 180 Teile | Klebharze bezogen auf 100 Teile des Elastomers und |
| 20 bis 170 Teile | polymerer Weichmacher bezogen auf 100 Teile des Elastomers, wobei dieser aus der Gruppe der Polyethylen-Propylen-Copolymere, Polyisobutylen und Polybutylen stammt und eine Erweichungstemperatur von unter 25 °C besitzt, |
und wobei die Summe der Anteile der Harze und polymeren Weichmacher 200 Teile nicht übersteigt.

2. Verwendung nach Anspruch 1, **dadurch gekennzeichnet, dass** die Elastomere überwiegend im Mittelblock hydriert sind, insbesondere vollständig im Mittelblock hydriert sind.

3. Verwendung nach den Ansprüchen 1 oder 2, **dadurch gekennzeichnet, dass** es sich bei den Klebharzen um hydrierte Harze handelt.

4. Verwendung nach einem der Ansprüche 1 bis 3, **dadurch gekennzeichnet, dass** kein weichmachendes Öl eingesetzt wird.

5. Verwendung nach mindestens einem der vorhergehenden Ansprüche, **dadurch gekennzeichnet, dass** die Dicke der Trägerschicht zwischen 20 und 80 µm beträgt, gegebenenfalls einschließlich einer Haftvermittlerschicht, die zwischen der Trägerschicht und der Kleberschicht angeordnet ist.

6. Verwendung nach mindestens einem der vorhergehenden Ansprüche, **dadurch gekennzeichnet, dass** die Trägerschicht mindestens ein Lichtschutzmittel in einer Menge von mindestens 0,15 Gew.-% enthält.

7. Verwendung nach mindestens einem der vorhergehenden Ansprüche, **dadurch gekennzeichnet, dass** die UV-Durchlässigkeit der Schutzfolie im Wellenlängenbereich von 290 bis 360 nm unter 1 % liegt.

## Claims

1. Use of a self-adhesive protection film on freshly painted surfaces of motor cars or motor car parts as assembly protection or transit protection, having a single-ply or multi-ply backing layer, especially a polyolefinic backing layer, and a self-adhesive layer, **characterized in that**
| | |
|---|---|
| the self-adhesive composition is constructed as follows: | one or more elastomers based on block copolymers, including polymer blocks formed from vinylaromatics (A blocks), preferably styrene, and blocks formed by polymerizing 1,3-dienes (B blocks), preferably butadiene and isoprene and/or their hydrogenation products, and also |
| 30 to 180 parts | of tackifier resins per 100 parts of elastomer and |
| 20 to 170 parts | of polymeric plasticizer, based on 100 parts of the elastomer, from the group consisting of polyethylene-propylene copolymers, polyisobutylene, and polybutylene, with a softening temperature of below 25°C, |
the sum of the fractions of the resins and polymeric plasticizers not exceeding 200 parts.

2. Use according to claim 1, **characterized in that** the elastomers are hydrogenated predominantly in the middle block, and in particular are hydrogenated completely in the middle block.

3. Use according to claims 1 or 2, **characterized in that** the tackifier resins are hydrogenated resins.

4. Use according to one of claims 1 to 3, **characterized in that** no plasticizing oil is used.

5. Use according to at least one of the preceding claims, **characterized in that** the thickness of the backing layer is between 20 and 80 µm, including where appropriate an adhesion promoter layer, disposed between the backing layer and the adhesive layer.

6. Use according to at least one of the preceding claims, **characterized in that** the backing layer includes at least one light stabilizer in an amount of at least 0.15% by weight.

7. Use according to at least one of the preceding claims, **characterized in that** the UV transmittance of the protection film in the wavelength range from 290 to 360 nm is below 1%.

## Revendications

1. Utilisation d'une feuille de protection autoadhésive sur des surfaces fraîchement peintes d'automobiles ou de pièces d'automobiles, à titre de protection pendant le montage ou le transport, qui présente une couche de support en particulier polyoléfinique, simple ou multiple, et une couche autoadhésive, **caractérisée en ce que** la pâte autoadhésive est constituée de la façon suivante :
- un ou plusieurs élastomères à base de copolymères séquencés, qui contiennent des blocs polymères formés d'aromates de vinyle (blocs A), de préférence de styrène, et des blocs formés par polymérisation de 1,3-diènes (blocs B), de préférence le butadiène et l'isoprène ainsi que leurs produits d'hydrogénation, ainsi que :
- de 30 à 180 parties de résine adhésive pour 100 parties d'élastomère et
- de 20 à 170 parties d'un plastifiant polymère pour 100 parties d'élastomère, ce plastifiant provenant de l'ensemble constitué des polymères d'éthylène et de propylène, du polyisobutylène et du polybutylène, et possédant une température d'amollissement inférieure à 25° C,
- la somme des teneurs en résine et en plastifiant polymère ne dépassant pas 200 parties.

2. Utilisation selon la revendication 1, **caractérisée en ce que** les élastomères sont hydrogénés principalement dans le bloc central et en particulier sont hydrogénés complètement dans le bloc central.

3. Utilisation selon les revendications 1 ou 2, **caractérisée en ce que** les résines adhésives sont des résines hydrogénées.

4. Utilisation selon l'une quelconque des revendications 1 à 3, **caractérisée en ce que** l'on n'utilise pas d'huile plastifiante.

5. Utilisation selon au moins l'une quelconque des revendications précédentes, **caractérisée en ce que** l'épaisseur de la couche de support est comprise entre 20 et 80 µm, éventuellement en y incluant une couche de renforcement de l'adhérence disposée entre la couche de support et la couche d'adhésif.

6. Utilisation selon au moins l'une quelconque des revendications précédentes, **caractérisée en ce que** la couche de support contient au moins un agent de protection contre la lumière en quantité d'au moins 0,15 % en poids.

7. Utilisation selon au moins l'une quelconque des revendications précédentes, **caractérisée en ce que** la transparence de la feuille de protection aux UV dans la plage de longueurs d'onde de 290 à 360 nm est inférieure à 1 %.
